# EUROPÄISCHE PATENTANMELDUNG

(11) **EP 1 387 053 A1**
(43) Veröffentlichungstag der Anmeldung: **04.02.2004**
(21) Anmeldenummer: 03015060.1
(22) Anmeldetag: 03.07.2003
(51) Int. Cl.: F01P 5/02, F04D 29/58

(54) **Lüfteranordnung zur Kühlung von Kraftfahrzeug-Motoren**

(30) Priorität: 01.08.2002 DE 20211857 U
(71) Anmelder: ebm Werke GmbH & Co. KG, 74673 Mulfingen (DE)
(72) Erfinder: Bertolini, Thomas, Dr.-Ing., 77866 Rheinau (DE); Reichert, Erik, Dr.-Ing., 97980 Bad Mergentheim (DE); Schöne, Jürgen, Dr.-Ing., 97980 Bad Mergentheim (DE); Schneeweiss, Hartmut, Dipl.-Ing., 97980 Bad Mergentheim (DE); Maschke, Matthias, Dipl.-Ing. (FH), 74653 Künzelsau (DE); Lutz, Josef, Dipl.-Ing. (FH), 84034 Landshut (DE)
(74) Vertreter: Patentanwälte Dr. Solf & Zapf

(57) **Zusammenfassung**

Die Erfindung betrifft eine Lüfteranordnung (1) zur Kühlung von Kraftfahrzeug-Motoren, mit mindestens einem in einer Luft-Strömungsrichtung gesehen hinter einem von Motorkühlflüssigkeit durchflossenen Wärmetauscher (4) anzuordnenden, rotierend antreibbaren Lüfterrad (6). Das Lüfterrad (6) ist als Radiallaufrad (8) mit einem axialen, dem Wärmetauscher (4) zugekehrten Lufteinlass (10) und mit radialem Luftauslass (12) ausgebildet. Bevorzugt sind zwei an einem gemeinsamen Träger (14) gehalterte und strömungsmäßig durch ein Luftleitelement (16) voneinander getrennte Radiallaufräder (8) vorgesehen, wobei der Träger (14) in seinem außerhalb der Radiallaufräder (8) liegenden Flächenbereich mindestens eine Bypassöffnung (22) aufweist, die mit einem insbesondere klappenartigen, zum Öffnen und/oder Schließen der Bypassöffnung (22) ansteuerbaren Verschlußelement (24) ausgestattet ist.

## Beschreibung

Die Erfindung betrifft eine Lüfteranordnung zur Kühlung eines kraftfahrzeug-Motors, mit mindestens einem hinter einem von Motorkühlflüssigkeit durchflossenen Wärmetauscher anzuordnenden rotierend antreibbaren Lüfterrad.

Zur Kühlung von Kraftfahrzeug-Motoren werden heute fast ausschließlich Axiallüfter bzw. -Ventilatoren eingesetzt. Dies beruht darauf, dass die Arbeitspunkte der Ventilatoren in früheren Fällen bei relativ niedrigen Drücken lagen und die Axiallaufräder dadurch in einem Arbeitspunkt arbeiteten, der in einem optimalen Wirkungsgradbereich der Kennlinie lag.

Inzwischen hat sich aber bei moderneren Kfz die Packungsdichte im Motorraum deutlich erhöht, und die enger werdenden Platzverhältnisse führen zu einer wesentlichen Zunahme der Luftwiderstände, d. h. des Druckes, die der Ventilator zur Kühlung des Wärmetauschers zu überwinden hat. Trotz dieser Probleme behielt man in der Praxis das bisherige Konzept mittels Axiallüfterrädern jedoch weitgehend bei.

Eine Zunahme der Widerstände, d. h. des Druckes, führt bei einem Axialventilator dazu, dass der Volumenstrom abnimmt und dadurch ohne gegenwirkende weitere Maßnahmen eine ausreichende Kühlung des Kraftfahrzeugmotors nicht mehr gewährleistet ist. Zur Erhöhung des Volumenstromes besteht nun theoretisch die Möglichkeit der Verwendung größerer Lüfterräder, was sich aber praktisch wegen der beengten Platzverhältnisse im Motorraum nicht oder nur selten realisieren lässt. Die gängige Lösung, den erforderlichen Volumenstrom wieder zu erreichen, besteht darin, die Drehzahl des Ventilator-Laufrades zu erhöhen. Dadurch arbeitet der Ventilator jedoch deutlich unterhalb seines optimalen Wirkungsgrades. Die Erhöhung der Drehzahl ist natürlich auch mit einer Zunahme des Geräusches verbunden, was insbesondere bei geringer Fahrtgeschwindigkeit, wo die Kühlung des Motors durch den Fahrtwind gering ist, als sehr störend empfunden wird. Diese Nachteile wirken sich immer stärker aus, je mehr die Widerstände der Komponenten weiter zunehmen.

Der vorliegenden Erfindung liegt die Aufgabe zugrunde, eine Lüfteranordnung der genannten Art zu schaffen, die sich durch verbesserte Eigenschaften auch bei beengten Raumverhältnissen im Umgebungsbereich auszeichnet.

Erfindungsgemäß wird dies dadurch erreicht, dass das Lüfterrad als Radiallaufrad mit einem axialen, dem Wärmetauscher zugekehrten Lufteinlaß und mit radialem Luftauslaß ausgebildet ist.

Das erfindungsgemäße Konzept arbeitet somit mittels Radialventilatoren, die die Eigenschaft haben, dass sie gerade bei hohen Drücken mit optimalem Wirkungsrad arbeiten. Im Vergleich zu bekannten Axiallüfterkonzepten arbeitet ein Radiallaufrad für den geforderten Betriebspunkt nahe am Wirkungsgradoptimum. Daraus resultiert eine wesentlich niedrigere Leistungsaufnahme und ein wesentlich niedrigeres Geräusch gegenüber den Axiallüfterkonzepten. Ein weiterer Vorteil liegt in der höheren mechanischen Festigkeit und der damit verbundenen nur unwesentlichen Verformung während des Betriebs der Radiallüfterräder.

Das erfindungsgemäße Radiallüfterkonzept bietet auch insgesamt eine bessere Durchströmung des Motorkühlers bei hohen Fahrzeuggeschwindigkeiten, da dieses Konzept mehr Platz zur Anbringung von sogenannten Bypassklappen in einer den Lüfter tragenden Zarge bietet. Da Radiallüfterräder bei höheren Fahrtgeschwindigkeiten etwas mehr als Axiallüfterräder als Widerstand wirken, können die Bypassklappen bei Radiallüfterrädern etwas früher geöffnet werden, um den Durchströmwiderstand der Kühleranlage zu reduzieren.

In einer vorteilhaften Ausgestaltung der Erfindung sind zwei Radiallüfter vorgesehen, die insbesondere auslaßseitig durch ein Luftleitblech voneinander getrennt angeordnet sind. Dadurch werden die Luftströme beider Ventilatoren voneinander entkoppelt, und es wird eine optimale Abströmung der Ventilatoren erreicht.

Weitere vorteilhafte Ausgestaltungsmerkmale der Erfindung sind in den Unteransprüchen sowie der folgenden Beschreibung enthalten.

Anhand eines bevorzugten, in der Zeichnung veranschaulichten Ausführungsbeispiels soll die Erfindung genauer erläutert werden. Dabei zeigen:
- Fig. 1: eine stark schematische Seitenansicht im Bereich eines Kfz-Motors mit einer erfinderungsgemäßen Lüfteranordnung,
- Fig. 2: eine Perspektivansicht auf die dem Wärmetauscher des Motors zuzukehrende Lufteinlaßseite der Lüfteranordnung,
- Fig. 3: eine ähnliche Perspektivansicht auf die andere, dem Motorblock zuzukehrende Abströmseite der Lüfteranordnung mit Darstellung einer ersten Ausführung eines Luftleitelementes,
- Fig. 4: eine teilgeschnittene Perspektivansicht im Bereich einer Lüftereinheit,
- Fig. 5: einen Schnitt im Bereich eines elektrischen Antriebsmotors der Lüftereinheit und
- Fig. 6: eine vereinfachte Draufsicht auf die Abströmseite in einer Ausführungsvariante des Luftleitelementes.

In den verschiedenen Figuren der Zeichnung sind gleiche Teile stets mit den gleichen Bezugszeichen versehen.

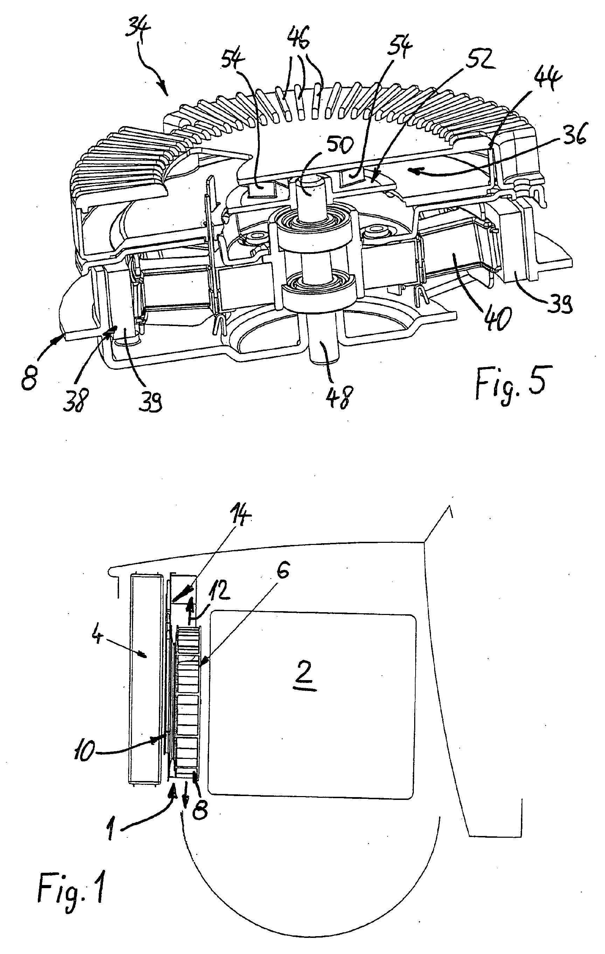

In Fig. 1 ist schematisch ein Motorraumbereich eines Kraftfahrzeugs dargestellt. Dabei ist eine erfindungsgemäße Lüfteranordnung 1 im Bereich zwischen einem Motorblock 2 eines Verbrennungsmotors und einem zugehörigen Wärmetauscher (Kühler) 4 angeordnet. Der Wärmetauscher 4 ist in Fahrtrichtung gesehen im vorderen Fahrzeugbereich vor dem Motorblock 2 angeordnet und wird von Motorkühlflüssigkeit (Wasser) durchströmt. In Fahrtrichtung gesehen ist der Wärmetauscher 4 zudem von Luft durchströmbar. Diese Luftströmung wird von der Lüfteranordnung 1 zumindest unterstützt bzw. bei stehendem Fahrzeug aktiv bewirkt. Dazu saugt die hinter dem Wärmetauscher 4 angeordnete Lüfteranordnung 1 Luft durch den Wärmetauscher 4 hindurch an. Dazu weist die Lüfteranordnung 1 mindestens ein rotierend antreibbares Lüfterrad 6 auf.

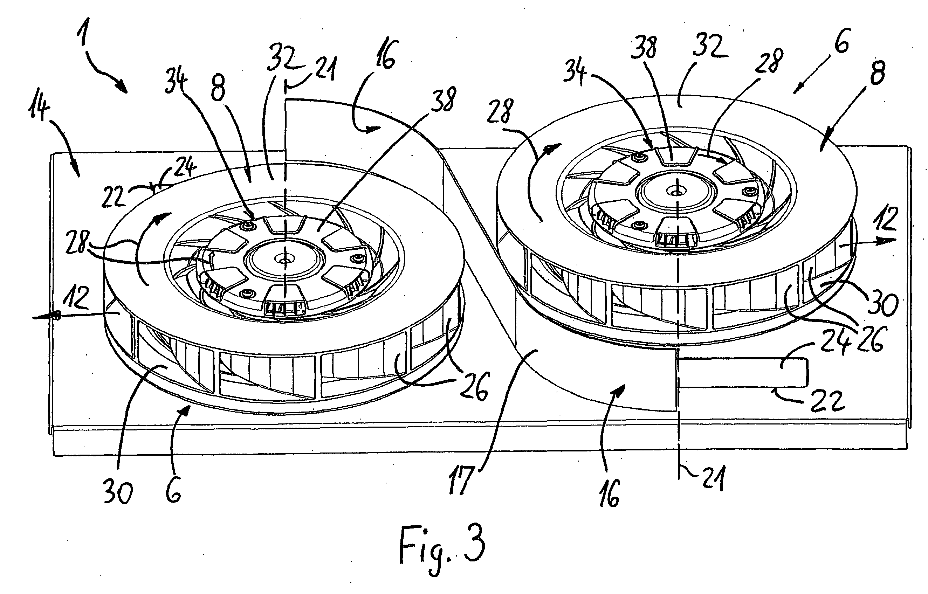

Erfindungsgemäß ist das Lüfterrad 6 als Radiallaufrad 8 mit einem axialen, dem Wärmetauscher 4 zuzukehrenden Lufteinlaß 10 und mit radialem Luftauslaß 12 ausgebildet. Bei der dargestellten, bevorzugten Ausführung weist die Lüfteranordnung 1 zwei Radiallaufräder 8 auf, die an einem gemeinsamen Träger 14 gehaltert und bevorzugt strömungsmäßig durch ein Luftleitelement 16 voneinander getrennt sind. Gemäß Fig. 3 ist das Luftleitelement 16 von einem insbesondere aus Blech oder Kunststoff bestehenden Streifenkörper gebildet (sogenanntes Luftleitblech 17), der als eine Art Trennwand zwischen den Radiallaufrädern 8 auf dem Träger 14 angeordnet ist.

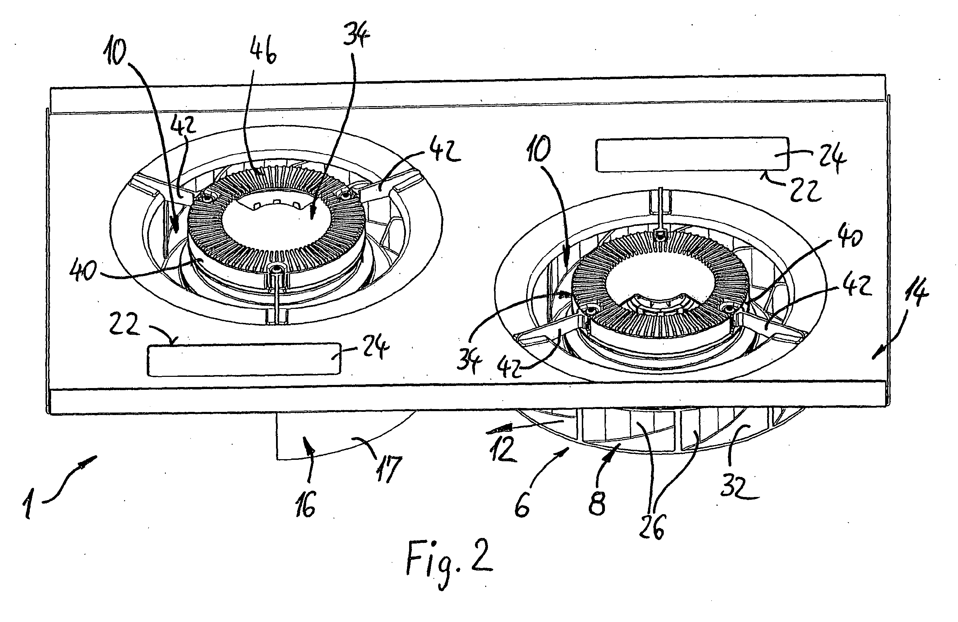

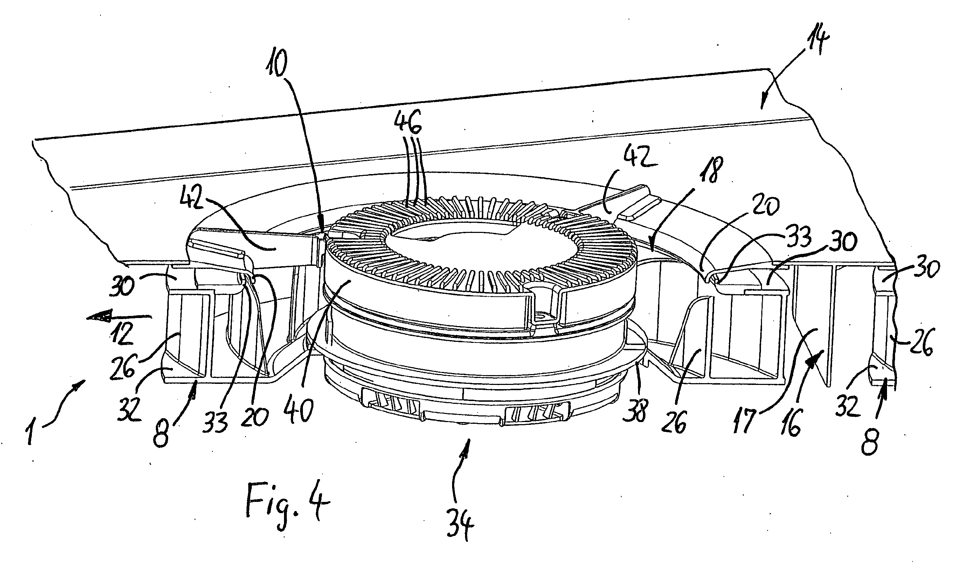

Der Träger 14 ist als eine im Wesentlichen plattenförmige, bevorzugt aus Kunststoff bestehende Zarge ausgebildet, die zu dem Wärmetauscher 4 etwa parallel angeordnet wird. Dabei hat die Zarge eine insbesondere rechteckige, an die Größe und Flächenform des Wärmetauschers 4 angepaßte Flächenform. Der Träger 14 kann einstückig mit dem Luftleitelement 16 geformt sein. Im Bereich des Lufteinlasses 10 jedes Radiallaufrades 8 weist der Träger 14 eine Luftöffnung 18 auf. Gemäß Fig. 4 kann die Luftöffnung 18 einen strömungsgünstig gekrümmt nach innen und hinten verlaufenden Öffnungsrand 20 aufweisen. Gemäß Fig. 2 und 3 ist jedes Radiallaufrad 8 in einer Hälfte des länglich rechteckigen Trägers 14 angeordnet, wobei die Laufräder 8 wie dargestellt bezüglich der Längsachse des Trägers 14 etwas versetzt angeordnet sind. So liegt das eine Radiallaufrad 8 der einen Längsseite näher und das andere Radiallaufrad 8 der anderen, gegenüberliegenden Längsseite des Trägers 14. Das Luftleitelement 16 weist bei der in Fig. 3 dargestellten Ausführung einen etwa S-förmigen Verlauf zwischen den Radiallaufrädern 8 auf, so dass die Enden des Luftleitelementes 16 sich z.B. etwa bis zu einer gedachten Linie 21 erstrecken, die durch eine Rotationsachse des jeweiligen Laufrades 8 sowie senkrecht zu den Längsseiten des Trägers 14 verläuft. Es ist aber auch praktisch jeder beliebige andere Verlauf mit längeren oder kürzeren Endbereichen möglich.

Wie sich weiterhin insbesondere aus Fig. 2 und 3 ergibt, weist der Träger bzw. die Zarge 14 in Ihrem außerhalb der Radiallaufräder 8 liegenden Flächenbereich mindestens eine Bypassöffnung 22 auf, die mit einem insbesondere klappenartigen, zum Öffnen oder Schließen der Bypassöffnung 22 ansteuerbaren Verschlußelement 24 ausgestattet ist. Gemäß Fig. 2 ist für jedes Radiallaufrad 8 eine solche, sogenannte Bypassklappe vorgesehen. Diese sogenannten Bypassklappen sind jeweils zwischen dem Radiallaufrad 8 und dem entfernter liegenden Längsrand des Trägers 14 angeordnet. Die Bypassklappen weisen eine länglich rechteckige, zum Träger-Längsrand parallele Form auf.

Jedes Radiallaufrad 8 ist freilaufend ausgebildet, d. h. ohne zusätzliches Strömungsgehäuse. Zudem weist jedes Radiallaufrad 8 insbesondere rückwärtsgekrümmte Schaufeln 26 auf; vergleiche dazu auch die in Fig. 3 durch Pfeile 28 eingezeichnete Rotationsrichtung. Weiterhin handelt es sich bei den Radiallaufrädern 8 bevorzugt um eine beidseitig gedeckelte Ausführung mit einer einlaßseitigen Deckscheibe 30 und einer gegenüberliegenden, abströmseitigen Bodenscheibe 32. Hierbei kann die einlaßseitige Deckscheibe 30 gemäß Fig. 4 im Randbereich des Lufteinlasses 10 einen mit nur geringem Spalt von dem Öffnungsrand 20 umgriffenen, dazu etwa parallel-koaxialen Öffnungsrad 33 aufweisen. Dadurch ergibt sich ein strömungsgünstiger Übergang. Gemäß Fig. 3 weisen die Deckscheiben 30 und die Bodenscheibe 32 gleiche Außendurchmesser auf. Es kann aber für bestimmte Fälle vorteilhaft oder sinnvoll sein, die Scheiben 30 und 32 mit unterschiedlichen Außendurchmessern auszubilden (nicht dargestellt).

Weiterhin wird bei der dargestellten bevorzugten Ausführung jedes Radiallaufrad 8 direkt von einem Elektromotor 34 angetrieben. Jedes Radiallaufrad 8 bildet somit zusammen mit seinem Elektromotor 34 eine elektrische Motor-Lüfter-Einheit. Dabei ist jeder Elektromotor 34 bevorzugt als kollektorloser, durch eine in Fig. 5 nur angedeutete Motorelektronik 36 angesteuerter Gleichstrommotor ausgebildet. Zudem handelt es sich um eine Ausgestaltung als Außenläufermotor. Dabei ist jedes Radiallaufrad 8 mit einem Außenläufer 38 des Motors 34 verbunden. In Fig. 5 sind Magnete 39 des Außenläufers 38 erkennbar. Ein Stator 40 des jeweiligen Elektromotors 34 ist über speichenartige Halteelemente 42 in der Luftöffnung 18 des Trägers 14 befestigt (siehe insbesondere Fig. 2 und 4).

Wie sich noch aus Fig. 5 ergibt ist die - nicht im Einzelnen dargestellte - Motorelektronik 36 in einem mit dem Stator 40 verbundenen Elektronikgehäuse 44 angeordnet, welches gemäß Fig. 2 und 4 im Bereich der Luftöffnung 18 des Trägers 14 sowie dem Wärmetauscher 4 zugwandt angeordnet und dabei vorzugsweise mit äußeren Kühlrippen 46 versehen ist, die durch ihre Anordnung im direkten Luftstrom liegen. Weiterhin ragt gemäß Fig. 5 eine mit dem Außenläufer 38 rotierende Welle 48 mit einem Ende 50 in das Elektronikgehäuse 44 hinein. An diesem Wellen-Ende 50 ist ein mit der Motorelektronik zur Kommutierung zusammenwirkender Drehstellungsgeber 52 angeordnet, der insbesondere von einem mit mehreren Polen versehenen Magnetring gebildet ist. Zudem weist der Drehstellungsgeber 52 zusätzliche Kühlflügel 54 zur Kühlung der Motorelektronik 36 innerhalb des Elektronikgehäuses 44 auf.

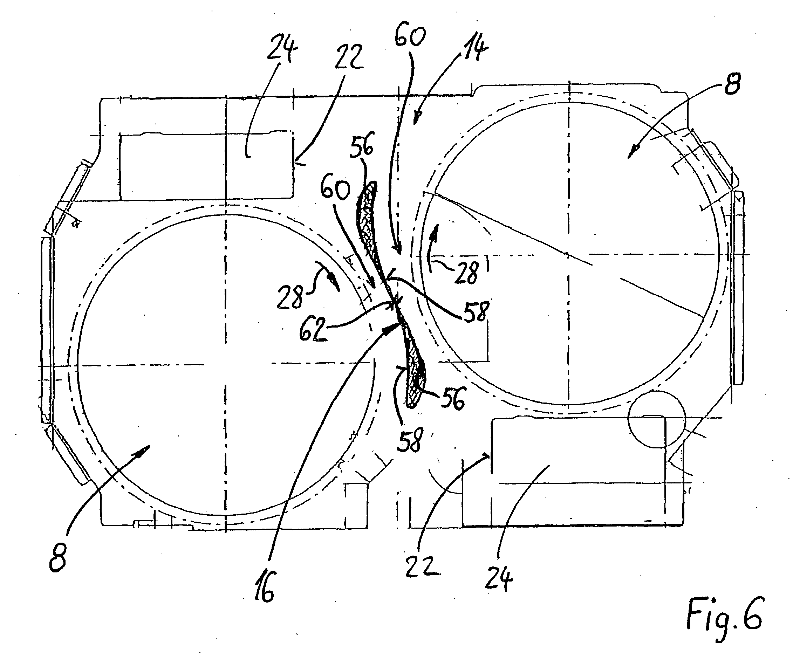

In Fig. 6 ist noch eine Ausführungsvariante des Luftleitelementes 16 veranschaulicht. Dieses Luftleitelement 16 ist als Strömungsprofilelement 56 derart ausgebildet, dass zwischen jedem Radiallaufrad 8 und einer gegenüberliegenden Strömungsfläche 58 des Strömungsprofilelementes 56 ein sich insbesondere in Rotationsrichtung 28 erweiternder Strömungskanal 60 gebildet ist. Bezüglich der Anordnung zwischen den Radiallaufrädem 8 ist das Strömungsprofilelement 56 punktsymmetrisch bezüglich eines Mittelpunktes 62 ausgebildet. Hierbei ist vorteilhafterweise jede Strömungsfläche 58 - in Draufsicht gemäß Fig. 6 gesehen - als Teilabschnitt einer Spirale ausgebildet, und zwar analog zu einem - hier zwar nicht vorhandenen, aber sonst oft üblichen - Spiralgehäuse eines Radialventilators.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Lüfteranordnung (1) zur Kühlung von Kraftfahrzeug-Motoren, mit mindestens einem in einer Luft-Strömungsrichtung gesehen hinter einem von Motorkühlflüssigkeit durchflossenen Wärmetauscher (4) anzuordnenden, rotierend antreibbaren Lüfterrad (6),
**dadurch gekennzeichnet, dass** das Lüfterrad (6) als Radiallaufrad (8) mit einem axialen, dem Wärmetauscher (4) zugekehrten Lufteinlass (10) und mit radialem Luftauslass (12) ausgebildet ist.

2. Lüfteranordnung nach Anspruch 1,
**gekennzeichnet durch** zwei an einem gemeinsamen Träger (14) gehalterte und bevorzugt strömungsmäßig **durch** ein Luftleitelement (16) voneinander getrennte Radiallaufräder (8).

3. Lüfteranordnung nach Anspruch 2,
**dadurch gekennzeichnet, dass** der Träger (14) als eine im Wesentlichen plattenförmige, zu dem Wärmetauscher (4) etwa parallel anzuordnende Zarge ausgebildet ist, die im Bereich des Lufteinlasses (10) jedes Radiallaufrades (8) eine Luftöffnung (18) aufweist.

4. Lüfteranordnung nach einem der Ansprüche 1 bis 3,
**dadurch gekennzeichnet, dass** der Träger (14) in seinem außerhalb der Radiallaufräder (8) liegenden Flächenbereich mindestens eine Bypassöffnung (22) aufweist, die mit einem insbesondere klappenartigen, zum Öffnen und/oder Schließen der Bypassöffnung (22) ansteuerbaren Verschlußelement (24) ausgestattet ist.

5. Lüfterahordnung nach einem der Ansprüche 1 bis 4,
**dadurch gekennzeichnet, dass** das/jedes Radiallaufrad (8) freilaufend mit insbesondere rückwärts gekrümmten Schaufeln (26) ausgebildet ist.

6. Lüfteranordnung nach einem der Ansprüche 1 bis 5,
**dadurch gekennzeichnet,dass** das/jedesRadiallaufrad(8) beidseitig gedeckelt mit einer einlaßseitigen Deckscheibe (30) und einer axial gegenüberliegenden Bodenscheibe (32) ausgebildet ist, wobei die Deckscheibe (30) und die Bodenscheibe (32) gleiche oder insbesondere unterschiedliche Außendurchmesser aufweisen.

7. Lüfteranordnung nach einem der Ansprüche 1 bis 6,
**dadurch gekennzeichnet, dass** das/jedes Radiallaufrad (8) direkt von einem Elektromotor (34) angetrieben wird.

8. Lüfteranordnung nach Anspruch 7,
**dadurch gekennzeichnet, dass** der/jeder Elektromotor (34) als kollektorloser, durch eine Motorelektronik (36) angesteuerter Gleichstrommotor ausgebildet ist.

9. Lüfteranordnung nach Anspruch 7 oder 8,
**dadurch gekennzeichnet, dass** der/jeder Elektromotor (34) als Außenläufermotor ausgebildet ist, wobei das Radiallaufrad (8) mit einem Außenläufer (38) verbunden ist.

10. Lüfteranordnung nach einem der Ansprüche 7 bis 9,
**dadurch gekennzeichnet, dass** ein Stator (40) des Elektromotors (34) über speichenartige Halteelemente (42) in der Luftöffnung (18) des Trägers (14) befestigt ist.

11. Lüfteranordnung nach einem der Ansprüche 8 bis 10,
**dadurch gekennzeichnet, dass** die Motorelektronik (36) in einem Elektronikgehäuse (44) angeordnet ist, welches im Bereich der Luftöffnung (18) des Trägers (14) und dem Wärmetauscher (4) zugewandt angeordnet und vorzugsweise mit Kühlrippen (46) versehen ist.

12. Lüfteranordnung nach Anspruch 11,
**dadurch gekennzeichnet, dass** eine Welle (48) des Elektromotors (34) mit einem Ende (50) in das Elektronikgehäuse (40) ragt, wobei an diesem Wellen-Ende (50) ein mit der Motorelektronik zusammenwirkender Drehstellungsgeber (52) angeordnet ist.

13. Lüfteranordnung nach Anspruch 12,
**dadurch gekennzeichnet, dass** der Drehstellungsgeber (52) zusätzliche Kühlflügel (54) zur Kühlung der Motorelektronik (36) aufweist.

14. Lüfteranordnung nach einem der Ansprüche 2 bis 13,
**dadurch gekennzeichnet,dass** das Luftleitelement (16) auf der Abströmseite zwischen den Radiallaufrädem (8) angeordnet und entweder als sogenanntes Luftleitblech (17) mit Streifenform und etwa S-förmigem Verlauf oder als Strömungsprofilelement (56) derart ausgebildet ist, dass zwischen jedem Radiallaufrad (8) und einer gegenüberliegenden Strömungsfläche (58) des Strömungsprofilelementes (56) ein sich insbesondere in Rotationsrichtung (28) erweiternder Strömungskanal (60) gebildet ist.

15. Lüfteranordnung nach Anspruch 14,
**dadurch gekennzeichnet,dass** jede Strömungsfläche (58) als Teilabschnitt einer Spirale ausgebildet ist.
